# EUROPEAN PATENT SPECIFICATION

(11) **EP 1 123 829 B1**
(45) Date of publication and mention of the grant of the patent: **26.05.2004**
(21) Application number: 00830087.3
(22) Date of filing: 08.02.2000
(51) Int. Cl.: B60M 1/04, B60M 5/00

(54) **Safety device for an overhead electrical line designed to supply power to transportation vehicles and method for operation of this device**
Sicherheitseinrichtung für eine elektrische Oberleitung zur Speisung von Transportfahrzeugen und Verfahren zum Betrieb dieser Einrichtung
Dispositif de sécurité pour ligne électrique aérienne destiné a alimenter véhicules de transport et méthode d'opération de ce dispositif

(43) Date of publication of application: 16.08.2001
(73) Proprietor: Euro Automation S.r.l., 38051 Borgo Valsugana (Trento) (IT)
(72) Inventor: Mittempergher, Antonio, 38051 Borgo Valsugana (Trento) (IT)
(74) Representative: Lanzoni, Luciano

(56) References cited:
- DE-A- 19 753 048
- US-A- 4 373 691

## Description

The present invention relates to a safety device for an overhead electrical line designed to supply power to transportation vehicles and to a method for operation of this device.

The device in question is intended mainly to be used in the sector relating to vehicles for railway, tramway and trolley bus transportation, in order to monitor electrical power supply lines, diagnosing and signalling in good time the presence of any faults and therefore allowing suitable protective action to be taken. At present, as is known, in particular in the railway/trolley-bus/tramway sector, inadequate protection exists for persons in particular as regards the overhead electrical networks in urban areas owing to possible breakage of cables or accidental contact with earth. In fact, it frequently happens that the breakage of a contact wire of the power supply line is unable to cause tripping of the corresponding substation switch, thus leaving the line live with serious risks for persons who should accidentally touch it.

This may occur, for example, following a short-circuit of a power supply line resulting in a short-circuit impedance which is not sufficiently low such as to produce a short-circuit current which is lower than the set threshold value of the safety switch present in the substation.

In order to limit the problems due to faults in electrical lines as a whole, particularly complex and advanced diagnostics systems have been developed recently, although these systems are not suitable for use in the electric-traction transport sector.

The main object of the present invention is therefore that of overcoming the drawbacks associated with the diagnostics devices of the known type, by providing a new safety device for overhead electrical lines designed to supply power to transportation vehicles, which is able to monitor the presence of faults and implement immediately measures ensuring the safety of the electrical line.

A further object of the present invention is to provide a safety device for overhead electrical networks which is constructionally simple and operationally entirely reliable.

A further object of the present invention is to provide a method of operation which allows the electrical line to be made safe quickly, simply and safely.

The technical features of the invention, in accordance with the abovementioned objects, may be understood from the contents of the claims indicated below and the advantages thereof will emerge more clearly from the detailed description which follows, with reference to the accompanying drawings, showing a purely exemplary and non-limiting embodiment thereof, in which:
- Figure 1 shows a schematic view of the operating principle of the safety device according to the present invention;
- Figure 2 shows in schematic form a peripheral unit of the safety device in question;
- Figure 3 shows the connection of the safety device to a double-wire line;
- Figure 4 shows the connection of the safety device to a single-wire line.

With reference to the accompanying drawings, 1 denotes in its entirety an overhead electrical line for supplying power to transportation vehicles 2, and 3 denotes the safety device for this line according to the present invention, respectively.

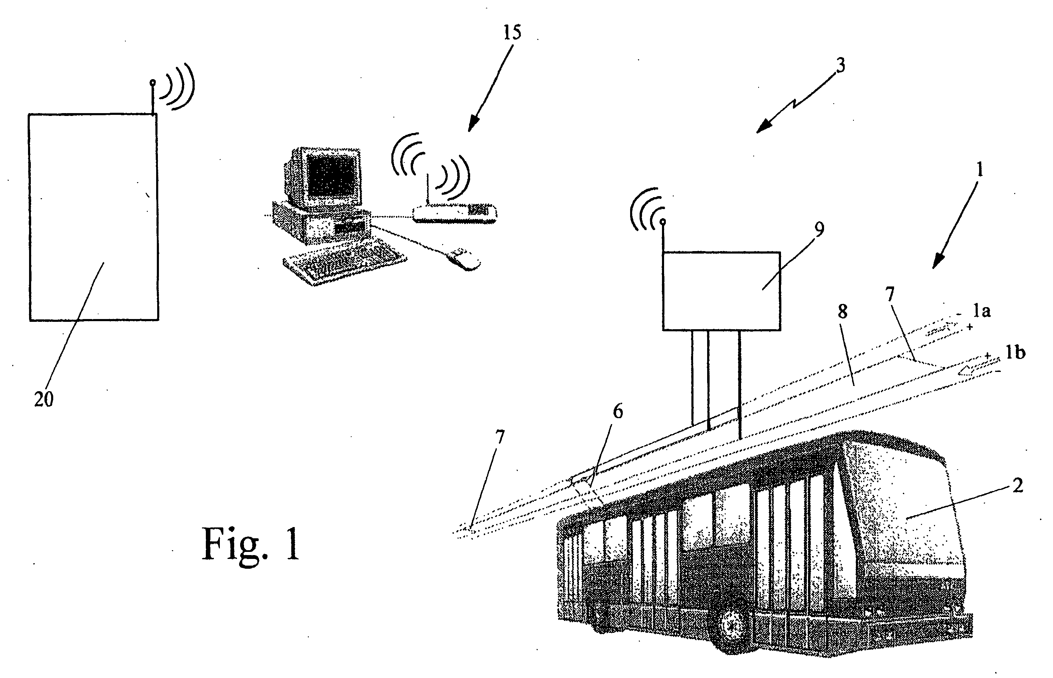

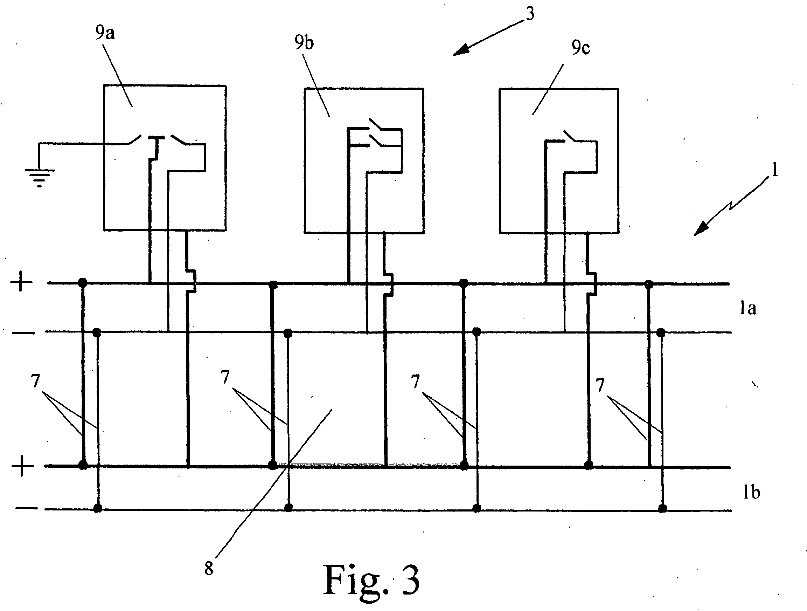

For the sake of simplicity of the description, reference will be made initially to the example of a direct-current electrical line 1 comprising a double single-wire contact line consisting, in accordance with that shown in Figures 1 and 3, of an output line 1 and a return line 1b (see Fig. 3).

The electrical line 1 is designed to transmit the necessary power supply current to the transportation vehicles 2 by means of electrical connection devices consisting, for example, of a sliding-contact pantograph or poles 6.

Structurally this type of double-wire line comprises a plurality of equipotential connections 7 designed to connect the conductors, with the same polarity, of the single-wire output line la to those of the single-wire return line 1b. In this way, the double-wire line 1 is divided into a plurality of positive and negative meshes 8 each extending, on average, over a distance of between 250 and 1500 metres. The safety device 3 is composed of a plurality of peripheral units 9, each of which is associated with a single mesh 8 and, therefore, essentially with a section of the electrical power supply line 1.

More particularly, each peripheral unit 9 is electrically connected to the mesh 8 so as to divide it into two sections substantially of the same length and comprises signal generating means 10 which send, into the corresponding mesh 8, control signals at a frequency close to the resonance frequency of the said mesh 8. Preferably, the electrical connection of each peripheral unit 9 is performed by means of two conductors connected to a corresponding mesh 8 of positive polarity, even though obviously the device according to the present invention would similarly be able to perform checks on a negative-polarity mesh. The resonance frequency of each individual mesh 8 is understood as being calculated under normal operating conditions of the line 1 and may be set to a desired value by means of activation of suitable electrical components (not shown in the accompanying figures). In particular, it may be advantageously envisaged tuning the control signals to a frequency equal to 105-125% of the resonance frequency of the mesh and connecting the peripheral unit 9 to the line 1 by means of a capacitor which also has the function of electrically decoupling the peripheral unit 9 from the direct-current line 1.

Each peripheral unit 9 also comprises analyser means 11 which are designed to receive the response signals from the corresponding mesh 8 and recognise the signal variations due to the presence of a fault in the mesh 8.

In fact, when the mesh 8 is in the normal operating condition and therefore fault-free, the control signals, which are sent from the peripheral unit 9 to the mesh 8 by the signal generating means 10, remain substantially tuned to the resonance frequency of the mesh 8.

When, however, a fault occurs in the mesh 8 (due, for example, to an interruption or to a short-circuit in the contact line or to an interruption in an equipotential connection 7 or to significant variations in the area of the mesh being monitored), the resonance frequency associated with the mesh 8 varies and the control signals produced by the signal generating means 10 are no longer tuned to this frequency. Consequently, the impedance of the mesh increases and the response signals are subject to a notable variation which is easily identified by the analyser means 11. It should be noted that, depending on the variations which occur in the response signals, the analyser means 11 are able to diagncse the type of fault which has occurred (defect in the contact line or the equipotential connections). Obviously, the abovementioned analyser means 11 envisages the use of signal filters which are able to distinguish the variations in the response signals caused by the presence of faults from variations in the response signals due to the presence of disturbances in the electrical line 1.

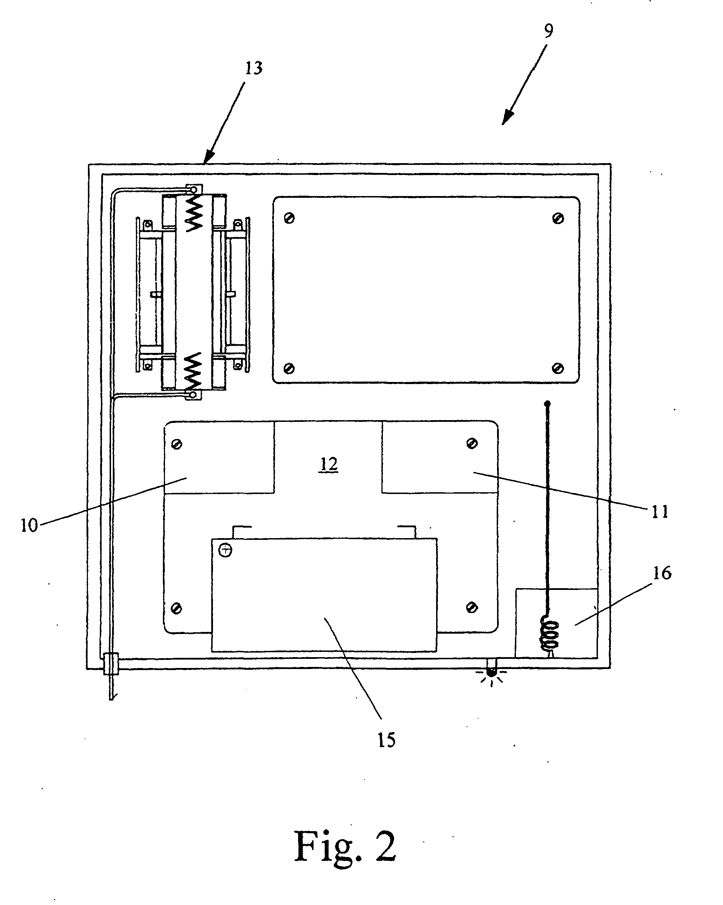

In accordance with the example of embodiment illustrated schematically in Fig. 2, each peripheral unit 9 also comprises actuator means 13 which are designed to vary between an operating position in which they form a short-circuit between the two different polarities of the.line 1 and a non-operating position in which they do not interfere with the line 1. Each peripheral unit 9 is operated by a logic control unit 12 electrically and operationally connected to the signal generating means 10, the analyser means 11 and the actuator means 13.

Operationally speaking, the logic control unit 12 actuates the actuator means 13 causing a short-circuit between the different polarities of the line 1 following the occurrence of a fault condition in the mesh 8 duly identified by the analyser means 11.

The short-circuit caused by the actuator means 13 produces opening of the safety switch present in the substation 20 which supplies power to the line 1.

As a result of the short-circuit produced by the actuator means 13, within a very short time from the occurrence of the fault condition it is possible to set the voltage to a safety value until the switch of the substation 20 is activated again. Basically, in the abovementioned case the operating voltage of the line is essentially halved. As a result, the safety device is able to satisfy the requisites for electrical safety protection laid down by the regulations applicable within the sector of railway/trolley-bus/tramway transportation.

Advantageously, each peripheral unit 9 communicates with an operating centre 15 via communication means 16 (see Figure 2) consisting, for example, of GSM equipment with an antenna able to send short messages (SMS).

The operating centre 15 in turn communicates with the substations 20 of the line 1 and is able to enable or disable operation of the corresponding (extra rapid) safety switches. In this way the operating centre 15, upon detecting a fault condition signalled by a peripheral unit 9, is able to set the corresponding substation 20 so as to disable any attempts to close again safety switch and inform the maintenance personnel so that they may carry out the necessary repair work needed to restore operation of the line 1.

The operating centre 15 is also able to record the fault conditions, storing the operating parameters of each peripheral unit 9 and the historical data, perform disconnection of the individual peripheral units 9 so as to allow activity (for example testing) on the electrical line 1 or perform reconnection thereof after the fault has been repaired.

The power supply for each individual peripheral unit 9 may be obtained directly by means of a connection to the said electrical power supply line 1. In this case it may be advantageously envisaged using an inverter in order to convert the voltage from a direct-current voltage to an alternating-current voltage, said inverter being connected to a transformer so as to separate galvanically the peripheral unit 9 from the line 1.

Advantageously, each peripheral unit 9 may also be provided with a battery 21 able to ensure operation of the safety device 3 so as to be able to verify the presence of any interruptions affecting the line 1 even when its own power supply is interrupted.

With reference to the example of embodiment illustrated in Figure 3, it can be seen that the peripheral unit 9 may have a short-circuit connection with an earth connection (peripheral unit 9a), a double short-circuit connection (peripheral unit 9b) or a single short-circuit connection (peripheral unit 9c).

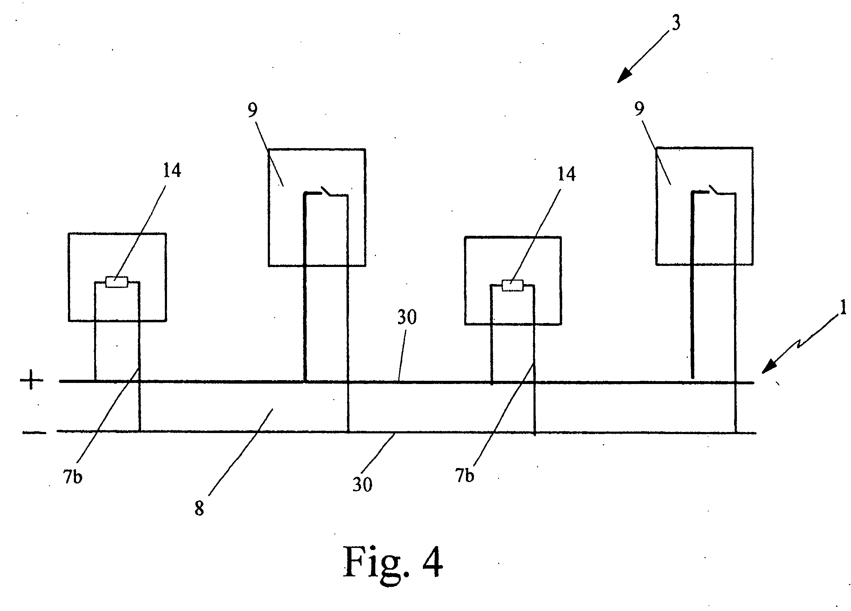

Figure 4 shows a second example of embodiment of the present invention adapted to the case of a direct voltage electrical line 1 formed by a single-wire contact line with a double wire, one of which is positive and one negative (generally to earth). Each individual mesh 8 consists of two separate parallel sections 30 having different polarity and of two corresponding termination connections 7b. The latter connect the ends of the two line sections 30 by means of high-impedance electrical means 14 which essentially allow only the control signals to pass and form a system for isolating the two wires of opposite polarity.

It should be noted, moreover, that in the case of an alternating-current electrical line 1 it is not necessary to make substantial modifications to the safety device 1. In fact, it is necessary to provide only two corresponding termination connections provided with electrical means which form substantially a short-circuit for the current at the resonance frequency and a high impedance for the current at the working frequency of the line 1.

In accordance with an important characteristic feature of the present invention, the safety device 3 envisages that two peripheral units 9 corresponding to two adjacent meshes 8 inject control signals at frequencies slightly different from each other. In fact, otherwise, should there be an interruption in an equipotential connection 7 and the voltages generated in the two adjacent meshes 8 were in phase opposition at the time of the fault, it would not be possible to detect any variation in voltage in the response signals. Therefore the voltages injected at different frequencies, into the two adjacent meshes 8 produce, in the event of a fault, a response signal oscillating at a frequency which is a function of the difference in the frequencies of the voltages injected. The appearance of a response signal at this phase-shifted frequency is detected by the analyser means 11 and indicates a fault in the equipotential connection 7.

Functionally speaking, the safety device described hitherto from a mainly structural point of view operates in the manner described below.

Each peripheral unit 9 operates in relation to a single line section 1 (be it direct current, alternating current, single-wire or double-wire) corresponding to a single mesh 8 and, by sending control signals produced by the signal generating means 10 at a frequency close to the resonance frequency of the mesh 8, performs continuous monitoring of the line parameters so as to detect, via analyser means 11, instantaneous changes in the electrical parameters of the mesh 8. In fact, when there is a variation in the electrical parameters, the control signals are no longer tuned to a frequency close to the resonance frequency of the mesh 8 and, consequently, there is a significant variation in the response signals.

In the event of a fault condition, therefore, with the consequent passing of the mesh (8) from the normal operating condition into the danger condition, the logic control unit 12 actuates the actuator means 13, producing a short-circuit in the line 1 which causes, on the one hand, an instantaneous reduction of the voltage to a value equal to about half the operating voltage of the line 1 and, on the other hand, subsequent tripping of the safety switch of the substation 20 supplying the said line. At this point, the operating centre 15, after receiving the signal from the peripheral unit 9 indicating the presence of the fault condition via the communication means 16, manages the procedure for restoring operation of the line 1. This may be performed also by disabling initially any attempts to close again the relevant switch of the substation 20.

The invention thus conceived therefore achieves the pre-set objects.

## Claims

1. Safety device (3) for an overhead electrical line (1) comprising two wires designed to supply power to transportation vehicles (2), **characterized in that** it comprises a plurality of peripheral units (9), each of which is electrically connected to a single mesh (8) of the said line (1) and is provided with: - signal generating means (10) designed to send, into the corresponding mesh (8), control signals at a frequency close to the resonance frequency of the mesh (8) calculated on the basis of electrical parameters corresponding to normal operating conditions of the line (1); - analyser means (11) designed to receive response signals from the mesh (8) following the sending of said control signals, said analyser means (11) being designed to recognise significant variations in said response signals due to passing of the mesh (8) from a normal operating condition, in which said control signals are substantially tuned to the resonance frequency of the mesh (8), to a danger condition, in which said control signals are no longer tuned to the resonance frequency of the mesh (8), the electrical parameters of the said mesh (8) being varied owing to the presence of at least one fault condition; - actuator means (13) designed to vary between an operating position, in which they form a short-circuit between the wires of the line (1), and a non-operating position, in which they do not interfere with the line (1); a logic control unit (12) electrically and operationally connected to said signal generating means (10), to said analyser means (11) and to said actuator means (13), said logic control unit (12) actuating said actuator means (13) in the operating position following the occurrence of a significant variation in said response signals detected by said analyser means (11).

2. Safety device according to Claim 1, **characterized in that** each said peripheral unit (9) divides the corresponding mesh (8) to which it is electrically connected into two sections having substantially the same extension.

3. Safety device according to Claim 1, **characterized in that**, in the case of a direct-current electrical line (1) comprising a double dual-wire contact line, each individual mesh (8) consists of the two separate parallel sections, with the same polarity, of the two single-wire lines (1a, 1b) and of two equipotential connections (7).

4. Safety device according to Claim 1, **characterized in that**, in the case of a direct-current electrical line (1) comprising a double single-wire contact line, each individual mesh (8) consists of two separate parallel sections (30), of different polarity, and of two corresponding termination connections (7b) which connect the ends of said line sections (30) by means of high-impedance electrical means (14) designed to allow substantially only the control signals to pass.

5. Safety device according to Claim 1, **characterized in that**, in the case of an alternating-current electrical line (1) comprising a double single-wire contact line, each individual mesh (8) consists of two separate parallel sections and of two corresponding termination connections which connect the ends of said line sections by means of high-impedance electrical means designed to allow substantially only the control signals to pass.

6. Safety device according to Claim 1, **characterized in** the said control signals are sent to the corresponding mesh (8) at a frequency equal to 105-125% of the resonance frequency of the said mesh (8).

7. Safety device according to Claim 1, **characterized in** the said peripheral unit (9) comprises at least one capacitor electrically connected to the corresponding mesh (8) and designed to allow setting of the resonance frequency value of the mesh (8).

8. Safety device according to Claim 1, **characterized in that** peripheral units (9) corresponding to adjacent meshes (8) of the electrical line (1) inject control signals at different frequencies.

9. Safety device according to Claim 1, **characterized in** the said difference in frequency between the signals injected into adjacent meshes (8) causes, in the event of a fault, the generation of a response signal which is a function of the frequency of the signals injected.

10. Safety device according to Claim 1, **characterized in that** each said peripheral unit (9) is supplied directly by the electrical power supply line 1.

11. Method of operation for ensuring the safety of an overhead electrical line (1) comprising two wires designed to supply power to transportation vehicles (2), **characterized in that** it comprises the following operational steps:
- sending of control signals to each individual mesh (8) into which the electrical line (1) is divided or can be divided, at a frequency close to the resonance frequency of the said mesh (8);
- analysis of the response signals received from the mesh (8) following the sending of said control signals and following recognition of significant variations in said response signals due to passing of the mesh (8) from a normal operating condition, in which said control signals are substantially tuned to the resonance frequency of the mesh (8), to a danger condition, in which said control signals are not tuned to the resonance frequency of the mesh (8), the electrical parameters of the said mesh (8) being varied owing to the presence of at least one fault condition;
- formation of a short-circuit between the wires of the line (1) following the detection of said variation in the response signal.

12. Method of operation according to Claim 11, **characterized in that** it also comprises a step involving transmission of a signal indicating the presence of a fault condition to a corresponding substation (20) designed to cause disabling of attempts to close again the safety switch located therein.

## Patentansprüche

1. Sicherheitseinrichtung (3) für eine zwei Drähte enthaltende elektrische Oberleitung (1), bestimmt zum Liefern von Leistung an Transportfahrzeuge (2), **dadurch gekennzeichnet, dass** sie eine Anzahl von Peripherieeinheiten (9) enthält, jede elektrisch mit einer einzelnen Masche (8) der genannten Leitung (1) verbunden und versehen mit: - Signalerzeugungsmitteln (10), die dazu vorgesehen sind, in die entsprechende Masche (8) Steuersignale mit einer Frequenz dicht an der Resonanzfrequenz der Masche (8) zu senden, kalkuliert auf der Basis von elektrischen Parametern, die den normalen Betriebsbedingungen der Leitung (1) entsprechen; - Analysemittel (11), dazu bestimmt, Ansprechsignale von der Masche (8) infolge des Aussendens der genannten Steuersignale zu empfangen, wobei die genannten Analysemittel (11) dazu vorgesehen sind, bedeutende Veränderungen in den genannten Ansprechsignalen zu erfassen, und zwar aufgrund des Übergangs der Masche (8) aus einem normalen Betriebszustand, in welchem die genannten Steuersignale im wesentlichen der Resonanzfrequenz der Masche (8) entsprechen, in einen Gefahrenzustand, in welchem die genannten Steuersignale nicht länger der Resonanzfrequenz der Masche (8) entsprechen, da die elektrischen Parameter der Masche (8) selbst durch das Vorhandensein von wenigstens einem Fehlerzustand verändert sind; - Stellantriebsmittel (13), die dazu bestimmt sind, sich zwischen einer Betriebsposition, in welcher sie einen Kurzschluss zwischen den Drähten der Leitung ( 1 ) bewirken, und einer Ruheposition, in welcher sie nicht mit der Leitung (1) in Berührung kommen, zu bewegen; - eine logische Steuereinheit (12), die elektrisch und funktionsmässig an die genannten Signalerzeugungsmittel (10), an die genannten Analysemittel (11) und an die genannten Stellantriebsmittel (13) angeschlossen sind, wobei die genannte logische Steuereinheit (12) infolge des Auftretens einer bedeutenden Veränderung in den durch die genannten Analysemittel (11) erfassten Ansprechsignale die genannten Stellantriebsmittel (13) auslöst.

2. Sicherheitseinrichtung nach Patentanspruch 1, **dadurch gekennzeichnet, dass** jede genannte Peripherieeinheit (9) die entsprechende Masche (8), an welche sie elektrisch angeschlossen ist, in zwei Abschnitte unterteilt, die im wesentlichen dieselbe Ausdehnung haben.

3. Sicherheitseinrichtung nach Patentanspruch 1, **dadurch gekennzeichnet, dass** im Falle einer elektrischen Gleichstromleitung (1), enthaltend eine zweifache Doppeldraht-Kontaktleitung, jede einzelne Masche (8) aus zwei getrennten parallelen Abschnitten mit der gleichen Polarität der beiden Einzeldrahtleitungen (1a, 1b) besteht, sowie aus zwei äquipotentialen Anschlüssen (7).

4. Sicherheitseinrichtung nach Patentanspruch 1, **dadurch gekennzeichnet, dass** im Falle einer elektrischen Gleichstromleitung (1), enthaltend eine zweifache Doppeldraht-Kontaktleitung, jede einzelne Masche (8) aus zwei getrennten parallelen Abschnitten (30) von unterschiedlicher Polarität und aus zwei entsprechenden Endanschlüssen (7b) besteht, welche die Enden der genannten Leitungsabschnitte (30) mit Hilfe elektrischer Mittel (14) von hoher Impedanz verbinden, dazu bestimmt, im wesentlichen nur den Durchlauf der Steuersignale zu erlauben.

5. Sicherheitseinrichtung nach Patentanspruch 1, **dadurch gekennzeichnet, dass** im Falle einer elektrischen Wechselstromleitung (1), enthaltend eine zweifache Einzeldraht-Kontaktleitung, jede einzelne Masche (8) aus zwei getrennten parallelen Abschnitten und aus zwei entsprechenden Endanschlüssen besteht, welche die Enden der genannten Leitungsabschnitte mit Hilfe von elektrischen Mitteln von hoher Impedanz verbinden, dazu bestimmt, im wesentlichen nur den Durchlauf der Steuersignale zu erlauben.

6. Sicherheitseinrichtung nach Patentanspruch 1, **dadurch gekennzeichnet, dass** die genannten Steuersignale an die entsprechende Masche (8) mit einer Frequenz gesandt werden, welche 105-125% der genannten Resonanzfrequenz der genannten Masche (8) entspricht.

7. Sicherheitseinrichtung nach Patentanspruch 1, **dadurch gekennzeichnet, dass** die genannte Peripherieeinheit (9) wenigstens einen Kondensator enthält, der elektrisch an die entsprechende Masche (8) angeschlossen und dazu bestimmt ist, die Eingabe des Resonanzfrequenzwertes der Masche (8) zu erlauben.

8. Sicherheitseinrichtung nach Patentanspruch 1, **dadurch gekennzeichnet, dass** Peripherieeinheiten (9), die den angrenzenden Maschen (8) der elektrischen Leitung (1) entsprechen, Steuersignale zu unterschiedlichen Frequenzen eingeben.

9. Sicherheitseinrichtung nach Patentanspruch 1, **dadurch gekennzeichnet, dass** der genannte Frequenzunterschied zwischen den in die angrenzenden Maschen (8) eingegebenen Signalen im Falle eines Fehlers das Erzeugen eines Ansprechsignals bewirken, welches Funktion der Frequenz der eingegebenen Signale ist.

10. Sicherheitseinrichtung nach Patentanspruch 1, **dadurch gekennzeichnet, dass** jede genannte Peripherieeinheit (9) direkt durch die elektrische Speisungsleitung (1) gespeist wird.

11. Betriebs verfahren zur Gewährleitung der Sicherheit einer zwei Drähte enthaltenden elektrischen Oberleitung (1), bestimmt zum Liefern von Leistung an Transportfahrzeuge (2), **dadurch gekennzeichnet, dass** es die folgenden Betriebsphasen enthält:
- Aussenden von Steuersignalen an jede einzelne Masche (8), in welche die elektrische Leitung (1) aufgeteilt ist oder aufgeteilt werden kann, und zwar mit einer Frequenz dicht an der Resonanzfrequenz der gesagten Masche (8);
- Analyse der von der Masche (8) empfangenen Ansprechsignale infolge des Aussendens der genannten Steuersignale und daraufhin das Erfassen von bedeutenden Veränderungen in den genannten Ansprechsignalen aufgrund des Übergangs der Masche (8) aus einem normalen Betriebszustand, in welchem die Steuersignale im wesentlichen der Resonanzfrequenz der Masche (8) entsprechen, in einen Gefahrenzustand, in welchem die genannten Steuersignale nicht der Resonanzfrequenz der Masche (8) entsprechen, wobei die elektrischen Parameter der genannten Masche (8) selbst durch das Vorhandensein von wenigstens einem Fehlerzustand verändert sind;
- Herstellung eines Kurzschlusses zwischen den Drähten der Leitung (1) infolge des Erfassens der genannten Veränderung in dem Ansprechsignal.

12. Betriebsverfahren nach Patentanspruch 11, **dadurch gekennzeichnet, dass** es ebenfalls eine Phase der Übertragung eines das Vorhandensein eines Fehlerzustandes anzeigenden Signals an eine Unterstation (20) enthält, die dazu bestimmt ist, den Versuch eines erneuten Schliessens des darin angeordneten Sicherheitsschalters zu verhindern.

## Revendications

1. Un dispositif de sécurité (3) pour ligne électrique aérienne (1) bifilaire destiné à alimenter des véhicules de transport (2), **caractérisé en ce qu'**il comprend une pluralité d'unités périphériques (9), chacune étant reliée par une liaison électrique à une seule maille (8) de ladite ligne (1), et équipé de :
- dispositif générateur de signaux (10) conçu pour envoyer, dans la maille correspondante (8), des signaux de commande à une fréquence proche de la fréquence de résonance de la maille (8), calculée sur la base de paramètres électriques correspondant à des conditions de fonctionnement normal de la ligne (1) ;
- dispositif analyseur (11) conçu pour recevoir les signaux de réponse de la maille (8) suite à l'envoi desdits signaux de commande, ledit dispositif analyseur (11) étant conçu de manière à détecter les variations significatives dans lesdits signaux de réponse dues au passage de la maille (8) d'une condition de fonctionnement normal, où lesdits signaux de commande sont fondamentalement accordés sur la fréquence de résonance de la maille (8), à une condition de danger, où lesdits signaux de commande ne sont plus accordés sur la fréquence de résonance de la maille (8), les paramètres électriques de ladite maille (8) ayant été modifiés en raison de la présence d'au moins une condition d'erreur ;
- dispositif actionneur (13), conçu pour varier entre une position de travail, où il réalise un court-circuit entre les fils de la ligne (1), et une position de repos où il n'interfère pas avec la ligne (1) ;
- une unité logique de commande (12) reliée par une liaison électrique et opérationnelle audit dispositif générateur de signaux (10), audit dispositif analyseur (11) et audit dispositif actionneur (13), de telle sorte que ladite unité logique de commande (12) détermine le déplacement en position de travail dudit dispositif actionneur (13) lorsqu'une variation significative dans lesdits signaux de réponse est détectée par ledit dispositif analyseur (11).

2. Dispositif de sécurité selon la revendication 1, **caractérisé en ce que** chaque unité périphérique (9) subdivise la maille (8) à laquelle elle est reliée via une liaison électrique en deux tronçons de dimensions fondamentalement égales.

3. Dispositif de sécurité selon la revendication 1, **caractérisé en ce que**, dans le cas d'une ligne électrique (1) en courant continu comprenant une double ligne de contact bifilaire, chaque maille (8) est formée par les deux tronçons parallèles séparés, de même polarité, des deux lignes unifilaires (1a, 1b) et par deux connexions équipotentielles (7).

4. Dispositif de sécurité selon la revendication 1, **caractérisé en ce que**, dans le cas d'une ligne électrique (1) en courant continu comprenant une double ligne de contact bifilaire, chaque maille (8) est formée par deux tronçons parallèles séparés (30), de différente polarité, et par deux connexions terminales (7b) correspondantes, qui relient les extrémités desdits tronçons de ligne (30) par l'intermédiaire de moyens électriques (14) à haute impédance conçus pour permettre essentiellement le passage exclusif des signaux de commande.

5. Dispositif de sécurité selon la revendication 1, **caractérisé en ce que**, dans le cas d'une ligne électrique (1) en courant alternatif comprenant une double ligne de contact unifilaire, chaque maille (8) est formée par deux tronçons parallèles séparés et par deux connexions terminales correspondantes, qui relient les extrémités desdits tronçons de ligne par l'intermédiaire de moyens électriques à haute impédance conçus pour permettre essentiellement le passage exclusif des signaux de commande.

6. Dispositif de sécurité selon la revendication 1, **caractérisé en ce que** lesdits signaux de commande sont envoyés à une maille (8) correspondante à une fréquence égale à 105-125 % de la fréquence de résonance de ladite maille (8).

7. Dispositif de sécurité selon la revendication 1, **caractérisé en ce que** ladite unité périphérique (9) comprend au moins un condensateur, relié à la maille (8) correspondante via une liaison électrique et conçu de manière à permettre le réglage de la valeur de la fréquence de résonance de la maille (8).

8. Dispositif de sécurité selon la revendication 1, **caractérisé en ce que** les unités périphériques (9) correspondant à des mailles (8) adjacentes de la ligne électrique (1) injectent des signaux de commande à différentes fréquences.

9. Dispositif de sécurité selon la revendication 1, **caractérisé en ce que**, en présence d'une erreur, ladite différence de fréquence des signaux injectés dans des mailles (8) adjacentes détermine la génération d'un signal de réponse qui est fonction de la fréquence des signaux injectés.

10. Dispositif de sécurité selon la revendication 1, **caractérisé en ce que** chaque unité périphérique (9) est directement alimentée par la ligne électrique 1.

11. Méthode d'opération pour assurer la sécurité d'une ligne électrique aérienne (1) bifilaire destinée à alimenter des véhicules de transport (2), **caractérisée en ce qu'**elle comprend les phases opérationnelles suivantes :
- envoi de signaux de commande à chacune des mailles (8) dans lesquelles la ligne électrique (1) est subdivisée, ou peut être subdivisée, à une fréquence proche de la fréquence de résonance de ladite maille (8) ;
- analyse des signaux de réponse reçus de la maille (8) après l'envoi desdits signaux de commande et après la détection de variations significatives dans lesdits signaux de réponse dues au passage de la maille (8) d'une condition de fonctionnement normal, où lesdits signaux de commande sont fondamentalement accordés sur la fréquence de résonance de la maille (8), à une condition de danger, où lesdits signaux de commande ne sont plus accordés sur la fréquence de résonance de la maille (8), les paramètres électriques de ladite maille (8) ayant été modifiés en raison de la présence d'au moins une condition d'erreur ;
- réalisation d'un court-circuit entre les fils de la ligne (1) après la détection de ladite variation dans le signal de réponse.

12. Méthode d'opération selon la revendication 11, **caractérisée en ce qu'**elle comprend également une phase de transmission d'un signal indiquant la présence d'une condition d'erreur à une sous-station (20) correspondante, en mesure de déterminer la désactivation des tentatives de refermeture du contacteur de sécurité situé à l'intérieur.
